# EUROPÄISCHE PATENTANMELDUNG

(11) **EP 1 582 656 A2**
(43) Veröffentlichungstag der Anmeldung: **05.10.2005**
(21) Anmeldenummer: 05006217.3
(22) Anmeldetag: 22.03.2005
(51) Int. Cl.: E04F 19/08

(54) **Einbaukasten für Etagenverteiler**

(30) Priorität: 29.03.2004 IT BZ20040014
(71) Anmelder: EUROTHERM S.P.A., 39010 Appiano (Bolzano) (IT)
(72) Erfinder: Pezzei, Cleto, 39057 Appiano (BZ) (IT)
(74) Vertreter: Oberosler, Ludwig

(57) **Zusammenfassung**

Einbaukasten für Etagenverteiler welcher aus Blech hergestellt ist und einen Rahmen (2) mit Inspektionsluke (3) aufweist, wobei der Körper des Einbaukastens (1) aus einem einzigen Stück flachem Blech ausgestanzt ist welches die Rückwand (1a), die beiden vertikalen Seitenwände (1c) und die obere horizontale Deckwand (1b) umfasst, wobei zwischen der Rückwand (1a) und den Seitenwänden (1c), sowie der oberen Deckwand (1b) Linien (F) für das vorbestimmte Falten vorgesehen sind, wobei die Seitenwände (1c) und die obere Deckwand (1b) einen äußeren Anpassungsrand (1g) aufweisen welcher durch eine Linie (F) für das vorbestimmte Anwinkeln definiert ist und wobei die kurze obere Seite der beiden Seitenwände (1c) einen Verbindungsrand (1h) aufweist welcher durch eine Linie (F) für das vorbestimmte Anwinkeln definiert ist und Bohrungen (1i) aufweist welche, bei einer um 90° abgewinkelter Position der Seitenwände (1 c) und der oberen Deckwand (1b) in Bezug auf die Rückwand (1a), mit Bohrungen (1i) an den kurzen Seiten der oberen Deckwand (1b) übereinstimmen.

## Beschreibung

Die Erfindung bezieht sich auf einen Einbaukasten aus Blech samt Rahmen und Inspektionsluke für den Einbau von Etagenverteiler, z.B. für Bodenheizung.
Es sind Einbaukästen der oben genannten Art bekannt welche sehr unterschiedliche Abmessungen und Konstruktionsmerkmale, in Abhängigkeit der zu installierenden Art und der jeweiligen Abmessungen des Verteilers, aufweisen. Die Konstruktionsmerkmale dieser bekannten Einbaukästen sehen geringe Anpassungsmöglichkeiten an die zu installierenden Verteiler, an die Einbaubedingungen des Kastens selbst in Abhängigkeit der Höhe des fertigen Fußbodens, bzw. an die Einbaunische, und an den Verlauf der Rohre, vor. Weiters werden die bekannten Einbaukästen in zusammengestelltem, für den Einbau vorbereitetem, Zustand gelagert und transportiert wodurch sie, bezogen auf ihr Gewicht, eine große Verpackung brauchen.

Die Erfindung stellt sich die Aufgabe einen Einbaukasten für Etagenverteiler der eingangs genannten Art zu schaffen welcher in mehreren Details den unterschiedlichen konstruktiven und maßbezogenen Ansprüchen der Verteiler unterschiedlicher Hersteller und auch betreffend unterschiedlicher Einbaubedingungen, anpassbar ist, wobei weiters die Verpackungsspesen, die Lagerspesen und Transportspesen reduziert werden.

Diese Aufgabe wird erfindungsgemäß dadurch gelöst, dass ein Einbaukasten vorgeschlagen wird welcher leicht und schnell, unmittelbar vor seinem Einbau, zusammenstellbar ist und somit im zerlegten Zustand, während der Lagerung und dem Transport, ein sehr bescheidenes Volumen einnimmt und eine einfache und flache Verpackung beansprucht. Der erfindungsgemäße Einbaukasten besteht wesentlich aus der Abwicklung des Kastenkörpers, bestehend aus einer Rückwand, zwei Seitenwänden und einer Deckwand, aus einem einstellbaren Rahmen mit Inspektionsluke, aus verstellbaren Fußteilen und aus verschiedenen Verstärkungs-, Befestigungs- und Auflageelementen.

Die beiden Seitenwände und die Deckwand des Einbaukastens sind erfindungsgemäß, zusammen mit der Rückwand, aus einem einzigen Stück Blech geformt, dabei sind die einzelnen Wände über vorbestimmte Abwinkelbereiche verbunden. Die Seitenwände und die Deckwand weisen Randstreifen auf, welche bei montiertem Einbaukasten einen umlaufenden Anpassungsrand bilden. Diese Randstreifen sind, zusammen mit den Verbindungsrändern welche entlang der oberen Seite beider Seitenwänden vorgesehen sind, aus dem selben Blechstück geformt und mit Linien versehen nach denen sie angewinkelt werden können. Die genannten Verbindungsränder können eventuell auch ohne Anwinkellinien sein und, in Bezug zur jeweiligen Seitenwand, bereits in einer um 90° angewinkelter Position sein. Um dem Einbaukasten die nötige Formstabilität zu verleihen weist die Deckwand mindestens eine in Längsrichtung verlaufende Versteifungsrippe auf, weiters ist die Rückwand im oberen Bereich innen durch ein Verstärkungsblech ausgesteift welches im oberen Bereich einen abgewinkelten Anschlag- und Befestigungsrand für die Deckwand bildet, während das Blech im unteren Bereich eine Rückhalteschiene für die vertikalen Befestigungsprofile ausbildet in welchen die Halteschrauben für den Verteiler einsetzbar sind. Die hintere Wand des Einbaukastens ist im unteren Bereich durch eine U-förmig ausgeformte Rückhalteschiene ausgesteift hinter welchen die unteren Enden der vertikalen Befestigungsprofile einsetzbar sind, deren oberen Enden von der Rückhalteschiene des Verstärkungsbleches zurückgehalten werden. Die zwei oder mehreren Befestigungsprofile können auf diese Weise über die gesamte horizontale Ausdehnung der Rückwand verstellt werden und somit können die Halteschrauben welche in die Befestigungsprofile verschiebbar eingesetzt sind, jegliche Befestigungsposition für den, in den Einbaukasten zu installierenden Verteiler einnehmen.

An den unteren Enden der Seitenwände des Einbaukastens sind Fußteile befestigbar mittels welcher die Höhe des Einbaukastens, bezogen auf die Höhe des fertigen Fußbodens, eingestellt werden kann. Die Rückwand des Einbaukastens ist mit Ausstanzungen versehen an welchen ein Putzgitter angebracht werden kann, um während der Ausführung der Mauerarbeiten den Einbaukasten fixieren zu können sind, aus den Seitenwänden seitlich ausbiegbare, Befestigungslaschen vorgesehen.

Im unteren vorderen Bereich des erfindungsgemäßen Einbaukastens ist die Anbringung eines ausgeformten Blechelementes zwecks Zurückhalten der biegsamen Rohre welche mit dem Verteiler verbunden sind vorgesehen, um im Bereich wo diese abgebogen sind um von einer vertikalen Position in eine horizontale, durch die Unterbetonplatte bestimmte, Position überführt zu werden.

An der Vorderseite ist im selben Bereich eine Verschlussplatte aus Blech mit Ausstanzungen welche als Putz- oder Mörtelträger wirken angebracht, die horizontalen Ränder dieses Bleches sind U-förmig ausgeformt. Gemäß einer Weiterentwicklung der Erfindung kann diese Verschlussplatte auch am unteren horizontalen Rand als Auflage für die biegsamen Rohre ausgebildet sein.

An der Vorderseite des Einbaukastens wird erfindungsgemäß, mittels zwei eventuell selbstschneidender Schrauben welche in Bohrungen an zwei nach innen gebogenen Laschen der Seitenwände des Einbaukastens einschraubbar sind, ein Rahmen befestigt. Dieser Rahmen weist einen umlaufenden äußeren Rand auf, dieser ist leicht zur Wand hin gebogen und dessen Ecken sind abgekantet um eine durchgehend anliegende Umfangslinie zu erreichen und an den Ecken eine Ausformung frei von Falten, Einschnitten und Schweißstellen herzustellen. Der selbe Rahmen ist innen, entlang der beiden vertikalen Schenkel, mit Anschlagränder versehen welche die Bohrungen für di obgenannten Befestigungsschrauben aufweisen während am unteren horizontalen Schenkel ein nach innen stehender Anschlagrand mit zwei Schlitzen für den Einsatz der schwenkbaren Inspektionsluke vorgesehen ist.

Die Inspektionsluke ist durch einen umlaufenden, nach innen geformten Rand ausgesteift, dieser weist im unteren horizontalen Bereich zwei vorstehende Zungen auf welche in die vorgenannten Schlitze am unteren Schenkel des Rahmens einsetzbar sind. Nahe dem oberen horizontalen Rand ist vorteilhafterweise ein Verschluss vorgesehen.

Die den erfindungsgemäßen Einbaukasten bildenden Teile nehmen in demontiertem Zustand ein sehr kleines Volumen ein, die Montage erfolgt mit Hilfe weniger Schrauben, die Vorbereitungsarbeiten für die Installation sind extrem einfach und zeitsparend weil der Zusammenbau betreffend das Anwinkeln und die Einnahme der Montageposition der Teile vorbestimmt ist. Die weite Verstellbarkeit der Fußteile des Einbaukastens, der Befestigungsprofile samt den daran verstellbaren Befestigungsschrauben sowie des Rahmens für die Inspektionsluke, ermöglichen eine leichte und schnelle Anpassung an die unterschiedlichen Installationsbedingungen und an die Verteiler unterschiedlicher Hersteller.

Die Erfindung wird nachfolgend anhand eines, in den beigelegten Zeichnungen schematisch dargestellten, vorzuziehenden Ausführungsbeispieles eines erfindungsgemäßen Einbaukastens für Etagenverteiler näher erklärt, dabei erfüllen die Zeichnungen rein erklärenden, nicht begrenzenden Zweck.

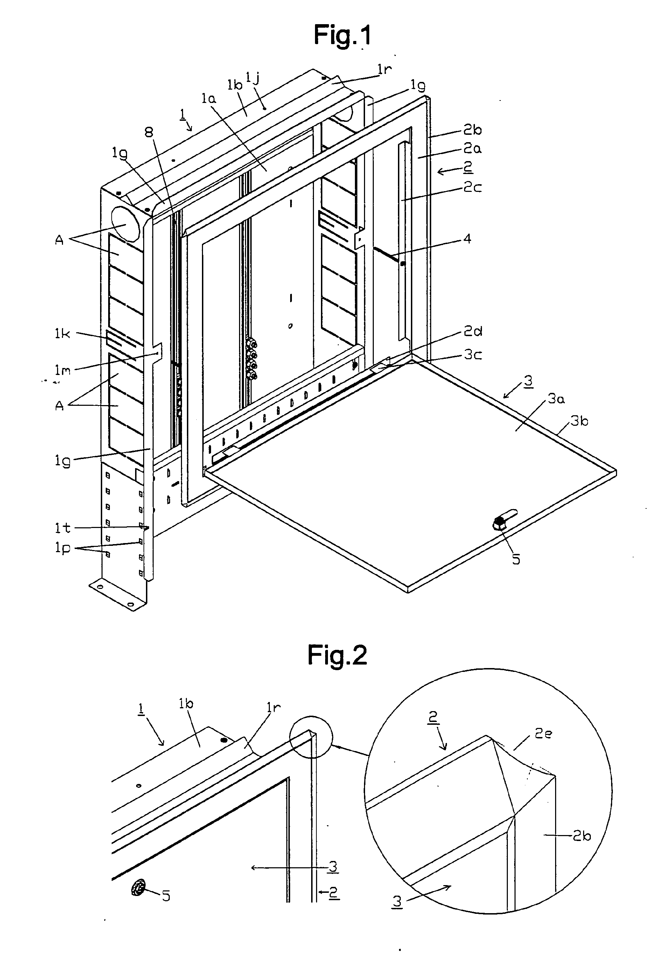

Die Fig. 1 zeigt in perspektivischer Darstellung einen erfindungsgemäßen Einbaukasten für Etagenverteiler in zusammengebautem Zustand samt Rahmen mit Inspektionsluke in Montageposition.

Die Fig. 2 zeigt in perspektivischer Darstellung den oberen rechten Eckbereich des in Fig. 1 gezeigten Einbaukastens mit dem Detail der oberen rechten Ecke des Rahmens für die Inspektionsluke in vergrößertem Maßstab.

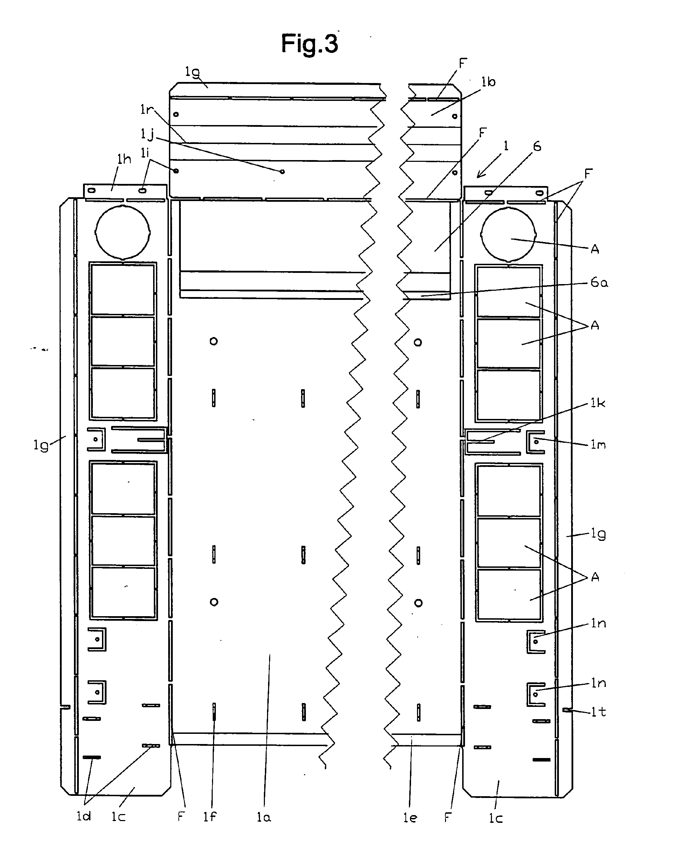

Die Fig. 3 zeigt die Abwicklung des in Fig. 1 gezeigten Einbaukastens samt Verstärkungs- und Halteblech für die Befestigungsprofile und vorderem Verschlussblech mit Auflagerand für die Auflage der flexiblen Rohre.

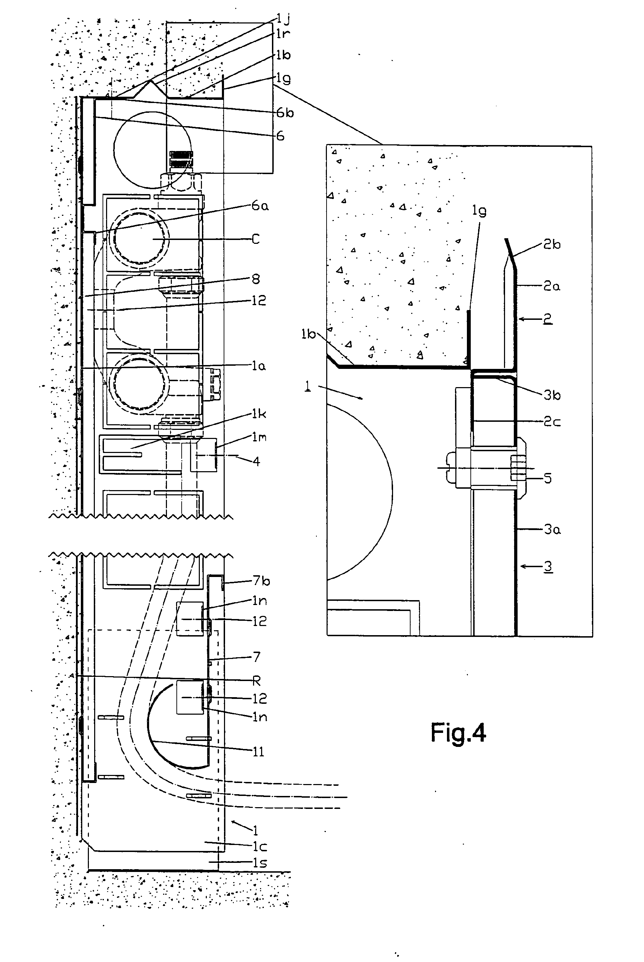

Die Fig. 4 ist eine Schnittdarstellung gemäß einer vertikalen Schnittebene durch einen installierten Einbaukasten samt Etagenverteiler und Rohre welche mit strichlierten Linien dargestellt sind und samt einem Detail in vergrößertem Maßstab welches einen Teil des Rahmens mit Inspektionsluke im Bereich des Verschlusses zeigt; das frontale Verschlussblech weist am unteren horizontalen Bereich einen als Auflage für die Rohre ausgeformten Rand auf.

Der Körper des erfindungsgemäßen Einbaukastens 1 besteht wesentlich aus einer Rückwand 1a, aus zwei vertikalen Seitenwänden 1c und aus einer oberen Deckwand 1b; all diese Teile sind aus einem einzigen zusammenhängenden Blechstück geformt. Die Rückwand 1a ist im oberen Bereich mit einem Verstärkungsblech 6 versehen welches z.B. mittels Punktschweißen verbunden ist, dieses ist so ausgeformt dass im oberen Bereich ein abgewinkelter Auflage- und Befestigungsrand 6b für die obere, in Montageposition um 90° zur Rückwand 1a abgewinkelte, Deckwand 1b aufscheint während im unteren Bereich eine Rückhalteschiene 6a für Befestigungsprofile 8 ausgebildet ist. Die selben Befestigungsprofile 8 sind an ihren unteren Enden hinter dem U-förmig ausgebildeten Rückhalterand 1e, welcher direkt aus der Rückwand 1a ausgeformt ist, eingesetzt.

In die Befestigungsprofile 8 welche seitlich über die gesamte Breitenerstreckung der Rückwand 1a verschiebbar sind, sind die Befestigungsschrauben 9 für die Befestigung des Etagenverteilers C eingesetzt.

Die seitlichen Wände 1c weisen einen vertikalen Anpassungsrand 1g und im oberen Bereich einen Verbindungsrand 1h auf, weiters sind diese mit mehreren Ausbrechteilen A für die Durchführung der Rohre versehen, weiters sind seitliche Befestigungslaschen 1k und Befestigungslaschen 1m, 1n vorgesehen, diese sind alle aus der selben Wand 1c durch Ausstanzen ausgeformt und ausbiegbar. Die Deckwand 1b weist mindestens eine in Längserstreckung verlaufende Versteifungsrippe 1r, einen Anpassrand 1g, Bohrungen 1i und Bohrungen 1j, auf.

Zwischen der Rückwand 1a sowie den Seitenwänden 1c und der oberen Deckwand 1b, wie auch entsprechend den Anpassungsrändem 1g und entsprechend den Verbindungsrändern 1h, sind Linien F für eine vorbestimmte Abwinkelung vorgesehen. Nachdem zuerst die Verbindungsränder um 90° in Bezug auf die Seitenwände abgewinkelt worden sind und anschließend die Seitenwände 1c und die Deckwand 1b in Bezug auf die Rückwand abgewinkelt worden sind, wird erreicht dass die Bohrungen 1i, bzw. die Bohrungen 1j der Deckwand, mit den entsprechenden Bohrungen 1i an den Verbindungsrändern und 1j am Verbindungsrand 6b des Verstärkungsbleches 6 zusammenpassen.

Die Rückwand 1a ist mit einer Reihe von Ausstanzungen 1f für die Befestigung eines Putzgitters versehen.
Die Seitenwände 1c sind mit mehreren Ausbruchteilen A für die Durchführung der, mit dem Verteiler C verbundenen, Rohre versehen, dieser ist mittels, an den verstellbaren Befestigungsprofilen 8 verschiebbaren, Befestigungsschrauben 12 befestigt. Am unteren Ende der Seitenwände 1c sind Fußteile z.B. mittels Flügelschrauben welche durch Bohrungen oder Schlitze an den Seitenwänden 1c und an den Fußteilen 1s so anbringbar, dass eine vertikale Verstellung der Position des Einbaukastens in Bezug auf die Ebene des fertigen Fußbodens möglich ist; zu diesem Zweck sind an den Anpassungsrändern 1g, Bezugskerben 1t vorgesehen. Die selbe vertikale Verstellbarkeit kann dadurch erreicht werden, dass die Seitenwände 1c mit einer Reihe von bügelförmigen horizontalen Ausstanzungen 1d und die Fußteile 1s mit einer Serie von entsprechenden vertikalen ausgestanzten Haken versehen sind. Die Befestigungslaschen 1k welche aus den Seitenwänden 1c geformt sind ermöglichen die erste Einrichtung und Fixierung des Einbaukastens 1. Die Laschen 1n dienen zur Befestigung eines frontalen Verschlussbleches 7 mittels Schrauben oder Nieten 12. Dieses Verschlussblech 7 weist an der unteren Seite einen Auflagerand 11 für die dahinter hochgeführten Rohre T welche in diesem Bereich vom vertikalen Verlauf unterhalb des Verteilers in den, von der Unterbetonplatte definierten, horizontalen Verlauf übergeführt werden. Das Verschlussblech 7 ist längs der oberen Seite mit einem U-förmigen Rand 7b ausgestattet, weiters weist es Ausstanzungen 7a auf welche als direkte Putzträger fungieren. Die Erfindung schließt nicht aus, dass für das Zurückhalten der biegsamen Rohre T an den Seitenwänden des Einbaukastens ein spezifisches Formelement befestigt wird.

Im Mittelbereich weisen die Seitenwände 1c Laschen 1m für die Befestigung eines Rahmens 2 samt Inspektionsluke 3 auf. Der Rahmen 2 besteht aus einer Stirnfläche 2a mit umlaufendem ausgeformtem, zur Wand hin angewinkeltem Rand 2b, dieser umlaufende Rand ist im Bereich der Ecken des Rahmens 2 abgekantet 2e wodurch ein Einschneiden, Schweißen und die Ausformung von Falten vermieden wird und eine durchgehende umlaufende Auflage des Rahmens an der Wand erreicht wird. Nach innen stehen vom Rahmen 2 an den vertikalen Schenkeln zwei Anschlagwinkel 2c ab welche von je einer Befestigungsschraube 4 durchdrungen werden welche an den entsprechenden Laschen 1m welche innen von den Seitenwänden 1c ausgebogen sind, eingeschraubt werden. Diese Befestigungsart ermöglicht eine Anpassung gemäß mehrerer Richtungen des Rahmens 2 in Bezug auf die Wand. Im unteren Bereich des Rahmens 2 ist ein innerer Anschlagrand 2d vorgesehen welcher für den Einsatz der, von der Inspektionsluke 3 abragenden, Zungen 3c entsprechende Schlitze aufweist. Die Inspektionsluke 3 besteht aus dem Lukenblatt 3a und dem umlaufenden Rand 3b; im oberen Bereich ist ein Verschluss 5 vorgesehen, dessen verdrehbarer Riegel hintergreift den Anschlagrand 2c am oberen horizontalen Schenkel des Rahmens 2.

## Patentansprüche

1. Einbaukasten für Etagenverteiler welcher aus Blech hergestellt ist und einen Rahmen (2) mit Inspektionsluke (3) aufweist, **dadurch gekennzeichnet, dass** der Körper des Einbaukastens (1) aus einem einzigen Stück flachem Blech ausgestanzt ist welches die Rückwand (1a), die beiden vertikalen Seitenwände (1c) und die obere horizontale Deckwand (1b) umfasst, dass zwischen der Rückwand (1a) und den Seitenwänden (1c), sowie der oberen Deckwand (1b) Linien (F) für das vorbestimmte Anwinkeln vorgesehen sind, dass die Seitenwände (1c) und die obere Deckwand (1b) einen äußeren Anpassungsrand (1g) aufweisen welcher durch eine Linie (F) für das vorbestimmte Anwinkeln definiert ist und dass die kurze obere Seite der beiden Seitenwände (1c) einen Verbindungsrand (1h) aufweist welcher durch eine Linie (F) für das vorbestimmte Anwinkeln definiert ist und Bohrungen (1i) aufweist welche, bei einer um 90° abgewinkelten Position der Seitenwände (1c) und der oberen Deckwand (1b) in Bezug auf die Rückwand (1a), mit Bohrungen (1i) an den kurzen Seiten der oberen Deckwand (1b) übereinstimmen.

2. Einbaukasten für Etagenverteiler gemäß Anspruch 1, **dadurch gekennzeichnet, dass** die Verbindungsränder (1h) welche mit den Seitenwänden (1c) einstückig sind bereits, in Bezug auf die genannten Seitenwände, um 90° abgewinkelt sind.

3. Einbaukasten für Etagenverteiler gemäß Anspruch 1, **dadurch gekennzeichnet, dass** an der Rückwand (1a) des Einbaukastens, innen im horizontalen oberen Bereich, ein Verstärkungsblech (6) befestigt ist welches gleichzeitig für die Halterung von Befestigungsprofilen (8) für den Verteiler (C) dient, dass dieses Verstärkungsblech (6) einen oberen horizontalen, Bohrungen (1j) aufweisenden, Verbindungsrand (6b) bildet welcher als Anschlag für die obere Deckwand (1b) in um 90° angewinkelter Position zur Rückwand (1a) fungiert, wobei die Bohrungen (1j) des Verbindungsrandes (6b) des Verstärkungsbleches (6) mit den Bohrungen (1j) der oberen Deckwand (1b) übereinstimmen um Befestigungsorgane aufnehmen zu können.

4. Einbaukasten für Etagenverteiler gemäß Anspruch 1, **dadurch gekennzeichnet, dass** die obere Deckwand (1b) mindestens eine in Längsrichtung verlaufende Versteifungsrippe (1r) und Bohrungen (1i) aufweist, wobei diese bei, gegenüber der Rückwand (1a) um 90°, angewinkelter Position der beiden Seitenwänden (1c) und der oberen Deckwand (1b) mit den Bohrungen (1i) am Verbindungsrand (1h) welcher oben von den Seitenwänden (1c) absteht, übereinstimmen.

5. Einbaukasten für Etagenverteiler gemäß Anspruch 1, **dadurch gekennzeichnet, dass** die Rückwand (1a) und das frontale Verschlussblech (7) Ausstanzungen (1f, 7a) aufweisen welche als Träger für Mörtel oder Putz oder für die Befestigung eines Putzgitters (R) dienen.

6. Einbaukasten für Etagenverteiler gemäß Anspruch 1, **dadurch gekennzeichnet, dass** der Rahmen (2) mit Inspektionsluke (3) einen äußeren, gemäß einem spitzen Winkel, zur Wand abgewinkelten Außenrand (2b) aufweist welcher im Bereich der vier Ecken eine Abkantung (2e) ohne Einschnitte, Schweißstelle oder Faltenbildung aufweist, dass der Rahmen innen an jedem der Schenkel einen Anschlagrand für die Inspektionsluke (3) aufweist und dass die seitlichen vertikalen Anschlagränder (2c) mindestens eine Bohrung für eine Befestigungsschraube (4) aufweisen welche an den Laschen (1m) des Einbaukastens (1) einschraubbar sind.
